# EUROPÄISCHE PATENTSCHRIFT

(11) **EP 0 874 691 B1**
(45) Veröffentlichungstag und Bekanntmachung des Hinweises auf die Patenterteilung: **26.05.1999**
(21) Anmeldenummer: 97902246.4
(22) Anmeldetag: 28.01.1997
(51) Int. Cl.: B01L 3/00, F15C 5/00

(54) **VORRICHTUNG ZUR GEKAPSELTEN AUFNAHME EINES MATERIALS**
DEVICE FOR ENCAPSULATING A MATERIAL
DISPOSITIF POUR ENCAPSULER UN MATERIAU

(30) Priorität: 15.03.1996 DE 19610293
(43) Veröffentlichungstag der Anmeldung: 04.11.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: ROTH, Mathias, D-69190 Walldorf (DE); ENDRES, Hanns-Erik, D-80689 München (DE); TRÄNKLER, Hans-Rolf, Universität der Bundeswehr, 85577 Neubiberg (DE)
(74) Vertreter: Schoppe, Fritz, Dipl.-Ing.
(86) Internationale Anmeldenummer: EP9700373
(87) Internationale Veröffentlichungsnummer: WO9734697

(56) Entgegenhaltungen:
- EP-A- 0 316 065
- EP-A- 0 347 579
- EP-A- 0 459 239
- EP-A- 0 471 431
- WO-A-93/07463
- DE-A- 3 520 416
- US-A- 4 198 135
- US-A- 5 345 213

## Beschreibung

Die vorliegende Erfindung betrifft eine Vorrichtung zur gekapselten Aufnahme eines Materials, insbesondere eines empfindlichen Materials. Insbesondere befaßt sich die Erfindung mit einer elektrisch zu öffnenden, miniaturisierbaren Vorrichtung zur gekapselten Aufnahme eines empfindlichen Materials.

Auf vielen Gebieten werden empfindliche Materialien, z. B. chemische Indikatormaterialien, Katalysatoren, Medikamente, eingesetzt. Empfindlich heißt, die Lebensdauer, d. h. die Verwendbarkeit für einen bestimmten Zweck, wird bei Kontakt mit einem bestimmten Stoff oder Stoffgemisch reduziert. Aufgrund dieser begrenzten Lebensdauer ist es erwünscht, diese Materialien erst kurz vor ihrem Einsatz in dem schädlichen Meßmedium freizugeben und sie bis zu diesem Zeitpunkt unter Schutzgas oder Schutzflüssigkeit oder Vakuum zu verwahren. Das schädliche Meßmedium kann mit der zu messenden Substanz identisch sein.

Übliche Methoden sind hierzu das Kapseln der Substanz in einem Glaskolben, Kunststoff-Folien oder ähnlichen Verpackungen. Der Nachteil dieser Methoden ist vielfältig: Die Kapselungsmethoden sind nur begrenzt miniaturisierbar und/oder der Verschluß ist nicht oder nur aufwending automatisch zu öffnen. Solche empfindlichen Stoffe werden auch in einem Gefäß eingeschlossen, welches über ein Ventil und/oder Schlauchsystem mit der Außenwelt verbunden ist. Diese Vorrichtung ist automatisch zu öffnen, doch kann hier die Geschwindigkeit der mechanischen Öffnung für manche Anwendungen nicht ausreichend sein. Ein Reagieren auf schnelle Vorgänge ist somit nicht möglich. Weiterhin begrenzt die notwendige Mechanik die minimal erreichbare Baugröße und die Kostenreduzierung.

Die direkte Beschichtung der zu schützenden Substanz mit z.B. elektrisch abdampfbaren Materialien ist nur sehr begrenzt einsetzbar, da diese Methode in vielen Fällen zu einer irreversiblen Kontamination des beschichteten Materials führt.

Die DE 3919042 A1 offenbart ein System zur Analyse von festen Substanzen auf Quecksilber. Bei diesem bekannten System wird eine zu analysierende feste Substanz in ein Gefäß eingebracht, das nachfolgend durch eine Membran verschlossen wird, wobei, wenn über der Membran ein Deckel auf den Rand des Gefäßes gesetzt ist, die Membran durch das Erhitzen der festen Substanz und einen dadurch bedingten Überdruck in dem Gefäß zerstört wird. Die bei dem in der DE 3919042 A1 offenbarten System verwendete Vorrichtung ist jedoch für eine Großserienfertigung nicht geeignet.

Die DE 3520416 C2 beschreibt eine Vorrichtung zum steuerbaren Öffnen einer Trennwand, wobei die Trennwand aus einer in einen Spannring eingesetzten Membran mit anliegenden Heizdrähten besteht, welche ein Öffnen der Membran bei Versorgung mit elektrischer Energie bewirken. Auch diese Vorrichtung ist nicht für eine Massenproduktion beispielsweise mittels mikromechnischer Verfahren geeignet.

Die DE 3818614 A1 und DE3915920 A1 offenbaren mikromechanische Strukturen mit einer Mehrzahl von Vertiefungen zur Aufnahme von kleinen Materialmengen, insbesondere auf dem Gebiet der Biotechnologie. Die Vertiefungen werden dabei mittels eines Deckels, der vorzugsweise mit den Vertiefungen korrespondierende Erhebungen aufweist, verschlossen.

Für den Nachweis von Stoffen in Gasen oder Flüssigkeiten existiert z.B. eine Vielzahl von Transducerbauformen. Viele funktionieren nach dem Prinzip der Widerstands- oder Kapazitätsmessung des Indikatormaterials. Bezüglich derartiger Transducerbauformen wird verwiesen auf H.-E. Endres, S. Rost, H. Sandmaier "A Physical System for Chemical Sensors", Proz. Microsystem Technologies, Berlin, 29.10. - 01.11.91, 70 - 75. Eine Änderung dieser Größe (n) wird mit einem Ereignis in dem zu untersuchenden Medium korreliert. Die für die z. B. Widerstandsmessung notwendigen Strukturen, z. B. Interdigitalstrukturen, werden oft in einer Dünnfilmtechnik auf ein Substrat, z. B. Silizium, Quarz, aufgebracht. Der Träger dieser Sensoren kann auch selbst wieder eine Membranstruktur sein.

Aus der Mikrosystemtechnik ist seit Jahren die Herstellung von dünnen Membranstrukturen, z. B. Si₃N₄ auf Si-Trägermaterial und andere Kombinationen, bekannt. Im allgemeinen werden diese Membranstrukturen aufgrund ihrer sehr niedrigen thermischen Wärmekapazität und/oder Wärmeleitfähigkeit eingesetzt. Sie dienen als Trägermaterial für temperaturempfindliche Widerstände, z. B. bei der Realisierung eines thermischen Durchflußmessers und/oder zur thermischen Isolierung eines Heizelements von seiner Umgebung.

Die US-A-5345213 offenbart chemische Sensorlelemente, die mit einem Heizelement sowie einer Wärmeverteilungsplatte versehen sind, um dadurch eine chemisch aktive Filmschicht der Sensorelemente auf eine vorbestimmte Temperatur zu erwärmen. Das Heizelement ist dabei auf einem Substrat unterhalb der chemisch aktiven Filmschicht angeordnet. Ein solches chemisches Sensorelement kann mit einer Schutzschicht beschichtet sein. Das Erwärmen des Sensorelements mittels des Heizelements sowie der Wärmeverteilungsplatte bewirkt dann, daß die Schutzschicht desselben verdampft oder abbrennt, wodurch das Sensorelement freigelegt oder aktiviert wird.

Der Erfindung liegt daher die Aufgabe zugrunde, eine Kapselungsvorrichtung mit einem in derselben gekapselten Material zu schaffen, wobei die Kapselungsvorrichtung schnell und einfach geöffnet werden kann, wobei bei der Öffnung eine Kontamination des gekapselten Materials verhindert wird.

Diese Aufgabe wird durch eine Kapselungsvorrichtung nach Anspruch 1 gelöst. Die vorliegende Erfindung schafft eine Kapselungsvorrichtung mit einem in derselben gekapselten Material, die einen eine Ausnehmung zur Aufnahme des Materials aufweisenden in Mikrosystemtechnik gebildeten Grundkörper aufweist, wobei das aufgenommene Material vollständig in der Ausnehmung angeordnet ist. Eine den Grundkörper überspannende, in Mikrosystemtechnik oder Dünnfilmtechnologie implementierte Membran ist zur Kapselung des Materials in der Ausnehmung des Grundkörpers vorgesehen, wobei die Membran von dem gekapselten Material beabstandet ist. Ferner weist die erfindungsgemäße Kapselungsvorrichtung eine elektrisch betätigbare Heizeinrichtung zum Zerstören der Membran, um das Material freizulegen, auf.

Die erfindungsgemäße Struktur bietet aufgrund des Membranabschlusses des empfindlichen Materials von der Umgebung die Möglichkeit, auf einfache, kontaminationssichere und schnelle Weise das Material freizulegen, wobei die Struktur in einfacher Weise einer Großserientechnik zugänglich ist. Durch eine geeignete Elektrodengeometrie kann das ordnungsgemäße Öffnen der Kapselung signalisiert werden.

Mit anderen Worten bedient sich die Erfindung einer Struktur, die mit gängigen großserientechnischen Methoden implementierbar ist. Hierzu kommt insbesondere eine in Mikrosystemtechnik ausgeführte Membran-Grundkörper-Struktur zur Kapselung des empfindlichen Materials in Betracht. Für die Zwecke der Erfindung kann die Membran jedoch auch in Dünnfilmtechnik ausgeführt sein.

Die Erfindung liefert damit eine Vorrichtung, mit der empfindliche Schichten oder Materialien sehr kostengünstig von ihrer Umwelt abgeschirmt werden können, wobei diese Kapselung bei Bedarf einfach zu lösen ist.

Gemäß einem wesentlichen Effekt der Erfindung bedient sich die Erfindung der Tatsache, daß in dünnen Membranen, welche in Dünnfilmtechnologie oder Mikrosytemtechnik implementiert sind, häufig hohe Spannungskräfte auftreten, welche in anderen Bereichen der Technik als Problem derartiger Membranstrukturen gelten. Diese Spannungskräfte, die in der Membran vorliegen, bewirken bei Anwendung von thermischen Kräften auf die Membran ein expolsionsartiges Zerplatzen derselben.

Da die Membran hierbei nicht verdampft, sondern in einzelne Stücke zerspringt, erfolgt lediglich eine in den meisten Anwendungsfällen vernachlässigbare, geringe Kontamination des empfindlichen Materials bzw. einer empfindlichen Materialschicht durch Membranbruchstücke, die bei geeigneter Wahl des Membranmaterials chemisch relativ inert sind.

Auch eine derartige Anlagerung von Membranbruchstücken kann bei der erfindungsgemäßen Struktur durch Einfüllen eines Schutzgases unter leichtem Überdruck oder bei Plazieren der Membranöffnung in Richtung der Schwerkraft ausgeschlossen werden.

Die Heizeinrichtung der erfindungsgemäßen Vorrichtung ist vorzugsweise als ein auf der Membran integrierter Heizer ausgeführt. Bei dieser Ausführungsform bewirkt ein kurzer Heizimpuls eine thermische Verspannung der Membran, durch welche diese zum Platzen gebracht wird. Die Zeit für einen derartigen Öffnungsvorgang liegt deutlich unter einer Sekunde, typischerweise im Millisekundenbereich. Damit schafft die Erfindung eine Vorrichtung zur Kapselung empfindlicher Materialien, welche kostengünstig ist, mikrosystemkompatibel ist, ein einfaches und schnelles Öffnen der Kapselung erlaubt, eine Kontamination empfindlicher Materialien verhindert und einer Serienherstellung zugänglich ist.

Gemäß einem weiterführenden Aspekt der Erfindung bildet die erfindungsgemäße Vorrichtung zur Kapselung der Schicht einen Bestandteil eines Sensorbauelementes, auf dem das empfindliche Material in Form eines Indikatormaterials angeordnet ist. Ein derartiger Sensor kann in automatischer Weise durch Zerspringen der Membran für Messungen zu einem beliebigen Zeitpunkt aktiviert werden.

Bevorzugte Ausführungsbeispiele der Erfindung werden nachfolgend unter Bezugnahme auf die beiliegenden Zeichnungen näher erläutert. Es zeigen:

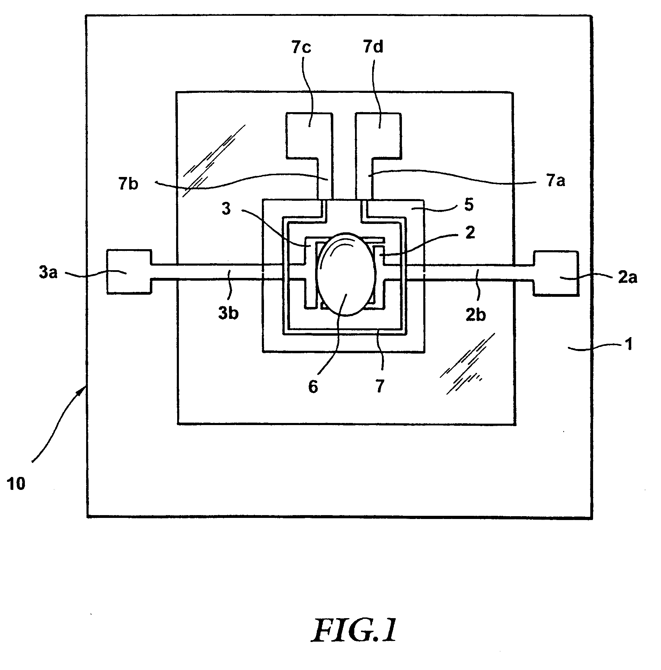

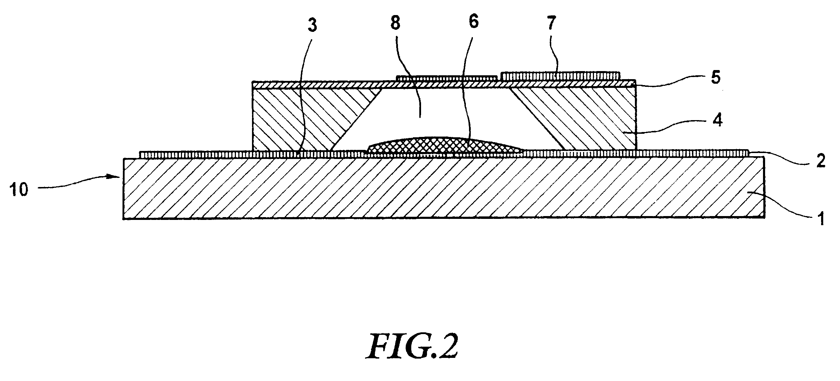

Fig. 1 und 2 eine Draufsichtdarstellung und einer Querschnittsdarstellung eines Gassensorbauelementes

Ein Gassensorbauelement, das in den Figuren 1 und 2 in seiner Gesamtheit mit dem Bezugszeichen 10 bezeichnet ist, umfaßt einen Träger 1, welcher beispielsweise aus Quarz besteht, auf den die Meßelemente (z.B. Leiterbahnstrukturen, MOSFET, SAW u.a.) 2, 3 einer Interdigitalstruktur zur Kapazitäts- und/oder Widerstandsmessung mit zugehörigen Verbindungsleitungen 2b, 3b und Anschlußflächen 2a, 3a aufgebracht sind. Die Interdigitalstruktur ist mit einem Indikatormaterial 6 bedeckt. Bei dem hier gezeigten Ausführungsbeispiel des Gassensorbauelementes 10 handelt es sich bei dem Indikatormaterial um 3-Aminopropyltrimethyloxysilan, welches an Luft nur eine begrenzte Lebensdauer von drei Monaten hat. Es ist deshalb erwünscht, die Indikatormaterialschicht erst kurz vor ihrem Einsatz in Kontakt mit der Umgebungsluft zu bringen, um die volle Lebensdauer der Indikatormaterialschicht zur Verfügung zu haben.

Zum Zwecke der Kapselung ist der Träger 1 an seiner mit dem Indikatormaterial 6 versehenen Seite mit einer Membranhaltestruktur 4 versehen, die bei dem hier gezeigten Ausführungsbeispiel aus einem Siliziumwafer besteht, in dem die Ausnehmung 8 durch übliche photolitographische und ätztechnische Methoden eingearbeitet ist. Für einen Fachmann auf dem Gebiet der Mikrosystemtechnik bedarf es keiner Erläuterung, daß Methoden zur Herstellung von einer eine Haltestruktur überspannenden Membran in der Mikrosystemtechnik üblich sind und daß hierbei üblicherweise eine Membran 5 zunächst auf eine Haltestruktur 4 aufgebracht wird, bevor die Ausnehmung 8 in die Haltestruktur 4 durch photolitographische und ätztechnische Maßnahmen eingebracht wird.

Die Membran 5 kann zwar auch aus Silizium bestehen. In Betracht kommen jedoch auch andere Materialien, wie beispielsweise Kunststoffolie und Glas.

Auf der Membran ist eine Heizerstruktur 7, welche über Anschlußleitungen 7a, 7b mit Anschlußflächen oder Bondpads 7c, 7d in Verbindung steht.

Ist es bei diesem Gassensorbauelement 10 erwünscht, zum Zwecke des Einsatzes die Indikatormaterialschicht 6 in Kontakt mit der Umgebungsluft zu bringen, so wird nach dem Einsetzen des Gassensorbauelementes 10 in ein Meßgerät die Membran 5 kurz vor Meßbeginn automatisch zerstört, in dem ein Strompuls dem Heizer 7 zugeführt wird, wodurch es zur bereits beschriebenen Zerstörung der Membran 5 kommt. Hierdurch wird die sensitive Indikatormaterialschicht 6 in Betrieb genommen.

In Abweichung zur dem beschriebenen Einzelsensor eignet sich die erfindungsgemäße Vorrichtung auch zur Kapselung einer Mehrzahl von Sensoren beispielsweise auf einem Chip, die kaskadiert in einem Gasmeßgerät betrieben werden. Nachdem ein Gassensorbauelement verbraucht ist, da dessen Indikatormaterialschicht 6 ihre Lebensdauer erreicht hat, aktiviert eine geeignete Steuerelektronik automatisch ein weiteres Gassensorbauelement zum Meßeinsatz, in dem dessen Membran zerstört wird. Auf diese Weise wird eine Vervielfachung der wartungsfreien Betriebszeit eines Gasmeßgerätes erreicht.

Ein weiteres Anwendungsbeispiel der erfindungsgemäßen Vorrichtung zur Kapselung von empfindlichen Schichten ist die Kapselung von irreversibel arbeitenden Indikatormaterialien.

Diese Materialklasse führt mit dem zu detektierenden Stoff eine irreversible Nachweisreaktion aus, so daß ein Sensor nur eine Messung ausführen kann. Der Vorteil dieser Materialien liegt in ihrer einfacheren Chemie begründet, um einen bestimmten (chemischen) Nachweis durchzuführen. Es sind in der Literatur weitaus mehr irreversible Erkennungsreaktionen bekannt, als reversible. Damit verbunden ist meistens auch eine höhere Selektivität (z.B. Immuno-Reaktion). Oft ist auch eine Kalibrierung nicht nötig. Der Transducer kann sich innerhalb der Kapselung oder außerhalb (= ein Transducer für alle gekapselten Schichten) derselben befinden.

Die hier beschriebene Vorrichtung ermöglicht den relativ unkomplizierten Aufbau eines großen Arrays von Einwegsensoren, wobei jeder nach der beschriebenen Methode gekapselt ist. Diese Kapselung kann für das ganze Array simultan durchgeführt werden. Hierzu muß der mit den Membranen versehene Baustein auf den mit dem Indikator beschichteten Träger aufgesetzt werden. Durch die große Miniaturisierungsmöglichkeit der Methode kann die Baugröße des ganzen Arrays sehr klein gehalten werden.

Ebenfalls kann der Heizer in der Ausnehmung 8 angeordnet sein, um einen thermisch erzeugten Überdruck einer Gasfüllung in der Ausnehmung 8 zum Absprengen der Membran zu verwenden.

## Patentansprüche

1. Kapselungsvorrichtung mit einem in derselben gekapselten Material (6), mit folgenden Merkmalen:
einem eine Ausnehmung (8) zur Aufnahme des Materials (6) aufweisenden, in Mikrosystemtechnik gebildeten Grundkörper (1, 4), derart, daß das Material vollständig in der Ausnehmung angeordnet ist;
einer den Grundkörper (1, 4) überspannenden, in Mikrosystemtechnik oder Dünnfilmtechnologie implementierten Membran (5) zur Kapselung des Materials (6) in der Ausnehmung (8) des Grundkörpers, derart, daß die Membran von dem Material beabstandet ist; und
einer elektrisch betätigbaren Heizeinrichtung zum Zerstören der Membran, um das Material (6) freizulegen.

2. Vorrichtung nach Anspruch 1, bei der der Grundkörper (1, 4) ein Sensorbauelement (1, 2, 3) umfaßt, auf dem das Material in Form eines Indikatormaterials angeordnet ist.

3. Vorrichtung nach Anspruch 2, bei der das Sensorbauelement ein Trägermaterial (1, 2) eine Sensorstruktur (2, 3) und eine die Sensorstruktur zumindest teilweise bedeckende Schicht des Indikatormaterials (6) umfaßt.

4. Vorrichtung nach Anspruch 2 oder 3, bei der der Grundkörper (1, 4) eine Membranträgerstruktur (4) aufweist, die den mit dem Indikatormaterial (6) bedeckten empfindlichen Bereich des Sensorbauelementes (2, 3) umschließt und auf der dem Sensorbauelement (2, 3) abgewandten Seite die Membran (5) trägt.

5. Vorrichtung nach einem der Ansprüche 2 bis 4, bei der das Sensorbauelement (1-3) zusammen mit dem Indikatormaterial (6) einen Gassensor bildet.

6. Sensorarray mit einer Mehrzahl von Vorrichtungen nach einem der Ansprüche 2 bis 5, welche auf einem gemeinsamen Trägermaterial (1) ausgebildet sind.

## Claims

1. An encapsulating device having a material (6) encapsulated therein, said encapsulating device comprising the following features:
a basic body (1, 4) provided with a recess (8) for receiving therein the material (6) and formed by microsystem technology in such a way that the material is fully arranged within said recess;
a diaphragm (5) extending across said basic body (1, 4) and implemented in microsystem or thin-film technology, said diaphragm (5) being used for encapsulating the material (6) in said recess (8) of the basic body in such a way that the diaphragm extends in spaced relationship with said material; and
an electrically actuable heating means for destroying said diaphragm so as to expose the material (6).

2. A device according to claim 1, wherein said basic body (1, 4) comprises a sensor component (1, 2, 3) on which the material is arranged in the form of an indicator material.

3. A device according to claim 2, wherein the sensor component comprises a support material (1, 2), a sensor structure (2, 3) and a layer of indicator material (6) covering said sensor structure at least partially.

4. A device according to claim 2 or 3, wherein said basic body (1, 4) includes a diaphragm support structure (4) which encloses the sensitive area of the sensor component (2, 3) covered with said indicator material (6) and which supports the diaphragm (5) on the side facing away from the sensor component (2, 3).

5. A device according to one of the claims 2 to 4, wherein the sensor component (1-3) and the indicator material (6) form together a gas sensor.

6. A sensor array comprising a plurality of devices according to one of the claims 2 to 5, which are formed on a common support material (1).

## Revendications

1. Dispositif d'encapsulation avec un matériau (6) encapsulé dans celui-ci, présentant les caractéristiques suivantes :
un corps de base (1, 4) réalisé selon une technique microsystème et présentant un évidemment (8) destiné à recevoir le matériau (6), de façon telle que le matériau soit placé intégralement dans l'évidement ;
une membrane (5) recouvrant le corps de base (1, 4), mise en oeuvre selon une technique microsystème ou selon la technologie des films minces, pour encapsuler le matériau (6) dans l'évidement (8) du corps de base, de façon telle que la membrane soit située à distance du matériau ; et
un dispositif de chauffage pouvant être actionné électriquement pour détruire la membrane, en vue de mettre à découvert le matériau (6).

2. Dispositif selon la revendication 1, dans lequel le corps de base (1, 4) comprend un composant de détecteur (1, 2, 3) sur lequel est disposé le matériau sous la forme d'un matériau indicateur.

3. Dispositif selon la revendication 2, dans lequel le composant de détecteur comprend un matériau formant substrat (1, 2), une structure de capteur (2, 3) et une couche du matériau indicateur (6) recouvrant au moins partiellement la structure de détecteur.

4. Dispositif selon la revendication 2 ou 3, dans lequel le corps de base (1, 4) comprend une structure de support de membrane (4), qui entoure la zone sensible du composant de détecteur (2, 3) recouverte par le matériau indicateur (6), et qui porte la membrane (5) sur son côté opposé à celui dirigé vers le composant de détecteur (2, 3).

5. Dispositif selon l'une des revendications 2 à 4, dans lequel le composant de détecteur (1-3) forme en commun avec le matériau indicateur (6), un détecteur de gaz.

6. Réseau de détecteurs comprenant un grand nombre de dispositifs selon l'une des revendications 2 à 5, qui sont réalisés sur un matériau formant substrat (1) commun.
